# EUROPEAN PATENT APPLICATION

(11) **EP 4 797 846 A1**
(43) Date of publication of application: **26.08.2026**
(21) Application number: 24896009.8
(22) Date of filing: 08.10.2024
(51) Int. Cl.: H04W 72/231, H04W 72/04, H04W 28/26

(54) **CG RESOURCE DEACTIVATION METHOD AND APPARATUS**

(30) Priority: 29.11.2023 CN 202311628186
(71) Applicant: HUAWEI TECHNOLOGIES CO., LTD., Shenzhen, Guangdong 518129 (CN)
(72) Inventor: XU, Rui, Shenzhen, Guangdong 518129 (CN); QIN, Yi, Shenzhen, Guangdong 518129 (CN); CAO, Youlong, Shenzhen, Guangdong 518129 (CN); PANG, Xu, Shenzhen, Guangdong 518129 (CN)
(74) Representative: Epping - Hermann - Fischer
(86) International application number: PCT/CN2024/123468
(87) International publication number: WO 2025/112915

(57) **Abstract**

A CG resource deactivation method and an apparatus are provided, which belong to the field of communication technologies. In the method, a plurality of CG resources, for example, a first CG resource and a second CG resource, are configured and activated for a terminal, so that the terminal can select one or more CG resources (for example, the first CG resource, or the first CG resource and a part or all of the second CG resource) that are adapted to a current uplink quantity to perform CG transmission. This improves flexibility of the CG transmission, avoids an increase in a transmission delay caused by a CG resource being unable to completely carry data that needs to be transmitted, and ensures service continuity. In addition, for a CG resource that the terminal does not need to use, for example, the second CG resource, the terminal may deactivate the second CG resource, so that a network can schedule the second CG resource to another terminal for use, thereby improving resource utilization.

## Description

This application claims priority to Chinese Patent Application No. 202311628186.0, filed with the China National Intellectual Property Administration on November 29, 2023 and entitled "CG RESOURCE DEACTIVATION METHOD AND APPARATUS", which is incorporated herein by reference in its entirety.

### TECHNICAL FIELD

This application relates to the communication field, and in particular, to a CG resource deactivation method and an apparatus.

### BACKGROUND

For an extended reality (extended reality, XR) service, due to a periodic packet arrival feature of the extended reality service, configured grant (configured grant, CG) transmission is usually used during uplink transmission. In a CG transmission method, during an uplink transmission process, an uplink scheduling resource is allocated or designated as a CG resource to a terminal through radio resource control (radio resource control, RRC) or a physical downlink control channel (physical downlink control channel, PDCCH). Then, the terminal may periodically and repeatedly use the CG resource for uplink transmission.

It can be learned that a CG resource in the CG transmission is relatively fixed, and may fail to meet requirements for a more flexible service volume in the future.

### SUMMARY

Embodiments of this application provide a CG resource deactivation method and an apparatus, to improve flexibility of CG transmission.

To achieve the foregoing objective, this application uses the following technical solutions.

According to a first aspect, a CG resource deactivation method is provided. The method may be performed by a terminal, may be performed by a module (for example, a processor, a chip, or a chip system) used in the terminal, or may be implemented by a logical node, a logical module, or software that can implement all or a part of functions of the terminal. For ease of description, the following uses an example in which the method is performed by the terminal. The method includes: obtaining an activated first configured grant CG transmission resource and an activated second CG resource; and when uplink data is completely carriable by the first CG resource, sending the uplink data by using the first CG resource; or when the uplink data is not completely carriable by the first CG resource, sending the uplink data by using the first CG resource and a third CG resource, where the third CG resource is a part or all of the second CG resource; and deactivating the second CG resource.

It can be learned from the method according to the first aspect that, a plurality of CG resources, for example, the first CG resource and the second CG resource, are configured and activated for the terminal, so that the terminal can select one or more CG resources (for example, the first CG resource, or the first CG resource and a part or all of the second CG resource) that adapt to a current uplink quantity to perform CG transmission, to improve flexibility of the CG transmission, avoid an increase in a transmission delay caused because a CG resource cannot completely carry data that needs to be transmitted, and ensure service continuity. In addition, for a CG resource that does not need to be used by the terminal, for example, the second CG resource, the terminal may deactivate the second CG resource, so that a network can schedule the second CG resource to another terminal for use, to improve resource utilization.

In a possible design solution, the method according to the first aspect may further include: receiving first information, where the first information indicates to deactivate the second CG resource. Correspondingly, the deactivating the second CG resource includes: deactivating the second CG resource based on the first information, to implement deactivation as required based on an indication. This avoids affecting service continuity due to an increase in a transmission delay caused because the terminal autonomously deactivates the second CG resource when the second CG resource does not need to be deactivated.

Optionally, the first information may be carried in at least one of the following: a downlink control information DCI message, a radio resource control RRC message, or a medium access control-control element MAC-CE message. That is, an existing message is reused for implementation, to reduce implementation difficulty and complexity. Alternatively, a newly defined message may be used for implementation, to decouple from the existing message, so that information element transfer can be more flexible.

In a possible design solution, the method according to the first aspect may further include: receiving second information, where the second information indicates duration of a timer.

Correspondingly, the deactivating the second CG resource includes: deactivating the second CG resource when the timer expires, to implement deactivation as required based on an indication. This avoids affecting service continuity due to an increase in a transmission delay caused because the terminal autonomously deactivates the second CG resource when the second CG resource does not need to be deactivated.

It may be understood that the foregoing manners of deactivating the second CG resource are merely some examples, and are not limited. For example, alternatively, the terminal may autonomously determine, according to a local policy, to deactivate the second CG resource when there is no uplink transmission requirement currently; current uplink transmission ends; it is estimated that subsequent uplink transmission data of a service decreases, and the first CG resource alone is sufficient; or the like, and notify the network of deactivation, so that the network can schedule the second CG resource to another terminal for use, to improve the resource utilization. In a possible design solution, the method according to the first aspect may further include: receiving third information, where the third information indicates to deactivate the first CG resource. Correspondingly, the deactivating the second CG resource includes: deactivating the second CG resource based on the third information.

Optionally, the method according to the first aspect may further include: deactivating the first CG resource based on the third information.

In other words, if the first CG resource is deactivated, the second CG resource should also be deactivated. For example, the first CG resource is a dedicated CG resource configured for the terminal, and the second CG resource is a CG resource configured for the terminal to share with another terminal. If none of dedicated CG resources needs to be used, it indicates that uplink transmission of the terminal ends. In other words, the terminal has no uplink transmission requirement in a current situation. Therefore, a shared CG resource is redundant for the terminal, and should also be deactivated, to improve the resource utilization.

Optionally, the third information is carried in at least one of the following: a DCI message, an RRC message, or a MAC-CE message. That is, an existing message is reused for implementation, to reduce implementation difficulty and complexity. Alternatively, a newly defined message may be used for implementation, to decouple from the existing message, so that information element transfer can be more flexible.

In a possible design solution, the method according to the first aspect may further include: receiving fourth information, and determining the third CG resource in the second CG resource based on a resource priority. The fourth information indicates the resource priority in the second CG resource. In this case, for second CG resources configured for different terminals, resource priorities may be different. In this way, a probability that a resource conflict occurs when the second CG resource is shared by a plurality of terminals can be avoided.

In a possible design solution, the method according to the first aspect may further include: sending fifth information, where the fifth information indicates that the third CG resource has been used for uplink transmission, so that the network can directly obtain the uplink data from the third CG resource without performing blind detection on the second CG resource, to reduce receiving complexity of the network.

Optionally, the fifth information may be carried in uplink control information UCI. That is, an existing message is reused for implementation, to reduce implementation difficulty and complexity. Alternatively, a newly defined message may be used for implementation, to decouple from the existing message, so that information element transfer can be more flexible.

In a possible design solution, the obtaining the activated first CG resource and the activated second CG resource includes: receiving a first message, where the first message is used to indicate and activate the first CG resource and the second CG resource. In other words, the first CG resource and the second CG resource may be dynamically configured by a network device for the terminal based on an actual requirement, to implement configuration as required. Certainly, the first CG resource and the second CG resource may alternatively be predefined by the terminal and the network device, and do not need to be dynamically configured, to avoid overheads caused by configuration.

According to a second aspect, a CG resource deactivation method is provided. The method may be performed by a network device, may be performed by a module (for example, a processor, a chip, or a chip system) used in the network device, or may be implemented by a logical node, a logical module, or software that can implement all or a part of functions of the network device. For ease of description, the following uses an example in which the method is performed by the network device for description. The method includes: receiving uplink data by using a first CG resource, where the uplink data is completely carriable by the first CG resource; or receiving the uplink data by using the first CG resource and a third CG resource, where the uplink data is not completely carriable by the first CG resource, and the third CG resource is a part or all of a second CG resource.

In a possible design solution, the method according to the second aspect may further include: sending first information, where the first information indicates to deactivate the second CG resource.

Optionally, the first information may be carried in at least one of the following: a downlink control information DCI message, a radio resource control RRC message, or a medium access control-control element MAC-CE message.

In a possible design solution, the method according to the second aspect may further include: sending second information, where the second information indicates duration of a timer. When the timer expires, the second CG resource needs to be deactivated.

In a possible design solution, the method according to the second aspect may further include: sending third information, where the third information indicates to deactivate the first CG resource. If the first CG resource is deactivated, the second CG resource is also deactivated.

Optionally, the third information is carried in at least one of the following: a DCI message, an RRC message, or a MAC-CE message.

In a possible design solution, the method according to the second aspect may further include: sending fourth information, where the fourth information indicates a resource priority in the second CG resource.

In a possible design solution, the method according to the second aspect may further include: receiving fifth information, where the fifth information indicates that the third CG resource has been used for uplink transmission.

Optionally, the fifth information may be carried in uplink control information UCI.

In a possible design solution, the method according to the second aspect may further include: sending a first message, where the first message is used to indicate and activate the first CG resource and the second CG resource.

It may be understood that, for technical effects of the method according to the second aspect, refer to the related descriptions in the first aspect. Details are not described again.

According to a third aspect, a communication apparatus is provided. The communication apparatus includes modules configured to perform the method according to the first aspect, for example, a transceiver module and a processing module. The transceiver module is configured to obtain an activated first configured grant CG transmission resource and an activated second CG resource. The processing module is configured to: when uplink data is completely carriable by the first CG resource, control the transceiver module to send the uplink data by using the first CG resource; or when the uplink data is not completely carriable by the first CG resource, control the transceiver module to send the uplink data by using the first CG resource and a third CG resource, where the third CG resource is a part or all of the second CG resource. The processing module is further configured to deactivate the second CG resource.

In a possible design solution, the transceiver module is further configured to receive first information, where the first information indicates to deactivate the second CG resource. The processing module is further configured to deactivate the second CG resource based on the first information.

In a possible design solution, the transceiver module is further configured to receive second information, where the second information indicates duration of a timer. The processing module is further configured to deactivate the second CG resource when the timer expires.

In a possible design solution, the transceiver module is further configured to receive third information, where the third information indicates to deactivate the first CG resource. The processing module is further configured to deactivate the second CG resource based on the third information.

In a possible design solution, the processing module is further configured to deactivate the first CG resource based on the third information.

In a possible design solution, the transceiver module is further configured to receive fourth information, where the fourth information indicates a resource priority in the second CG resource. The processing module is further configured to determine the third CG resource in the second CG resource based on the resource priority.

In a possible design solution, the transceiver module is further configured to send fifth information, where the fifth information indicates that the third CG resource has been used for uplink transmission.

In a possible design solution, the transceiver module is further configured to receive a first message, where the first message is used to indicate and activate the first CG resource and the second CG resource.

In a possible design solution, the communication apparatus according to the third aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the third aspect may further include a memory. The memory and a processor may be integrated together, or may be disposed separately. The memory may be configured to store a computer program and/or data related to the method according to the first aspect.

In this embodiment of this application, the communication apparatus according to the third aspect may be the terminal according to the first aspect, may be implemented by a module (for example, a processor, a chip, or a chip system) used in the terminal, or may be implemented by a logical node, a logical module, or software that can implement all or a part of functions of the terminal. For ease of description, the following uses the terminal as an example for description.

It may be understood that, for technical effects of the apparatus according to the third aspect, refer to the related descriptions in the first aspect. Details are not described again.

According to a fourth aspect, a communication apparatus is provided. The communication apparatus includes modules configured to perform the method according to the second aspect, for example, a transceiver module and a processing module. The processing module is configured to control the transceiver module to receive uplink data by using a first CG resource, where the uplink data is completely carriable by the first CG resource. Alternatively, the processing module is configured to control the transceiver module to receive the uplink data by using the first CG resource and a third CG resource, where the uplink data is not completely carriable by the first CG resource, and the third CG resource is a part or all of a second CG resource.

In a possible design solution, the transceiver module is further configured to send first information, where the first information indicates to deactivate the second CG resource.

In a possible design solution, the transceiver module is further configured to send second information, where the second information indicates duration of a timer. When the timer expires, the second CG resource needs to be deactivated.

In a possible design solution, the transceiver module is further configured to send third information, where the third information indicates to deactivate the first CG resource. If the first CG resource is deactivated, the second CG resource is also deactivated.

In a possible design solution, the transceiver module is further configured to send fourth information, where the fourth information indicates a resource priority in the second CG resource. In a possible design solution, the transceiver module is further configured to receive fifth information, where the fifth information indicates that the third CG resource has been used for uplink transmission.

In a possible design solution, the transceiver module is further configured to send a first message, where the first message is used to indicate and activate the first CG resource and the second CG resource.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and a processor may be integrated together, or may be disposed separately. The memory may be configured to store instructions related to the method according to the second aspect.

In this embodiment of this application, the communication apparatus according to the fourth aspect may be the network device according to the second aspect, may be implemented by a module (for example, a processor, a chip, or a chip system) used in the network device, or may be implemented by a logical node, a logical module, or software that can implement all or a part of functions of the network device. For ease of description, the following uses the network device as an example for description.

It may be understood that, for technical effects of the apparatus according to the fourth aspect, refer to the related descriptions in the first aspect. Details are not described again.

According to a fifth aspect, a communication apparatus is provided. The communication apparatus includes a processor. The processor is coupled to a memory, and the processor is configured to execute instructions stored in the memory, to cause the communication apparatus to perform the method according to either of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this embodiment of this application, the communication apparatus according to the fifth aspect may be the network device according to either of the first aspect and the second aspect, a chip (system) or another part or component that may be disposed in the network device, or an apparatus including the network device.

In addition, for technical effects of the communication apparatus according to the fifth aspect, refer to the technical effects of the method according to either of the first aspect and the second aspect. Details are not described herein again.

According to a sixth aspect, a communication apparatus is provided, including a processor and a memory. The memory is configured to store instructions, and when the processor executes the instructions, the communication apparatus is caused to perform the method according to either of the first aspect and the second aspect.

In a possible design solution, the communication apparatus according to the sixth aspect may further include a transceiver. The transceiver may be a transceiver circuit or an interface circuit.

The transceiver may be used by the communication apparatus according to the sixth aspect to communicate with another communication apparatus.

In this embodiment of this application, the communication apparatus according to the sixth aspect may be the network device according to either of the first aspect and the second aspect, a chip (system) or another part or component that may be disposed in the network device, or an apparatus including the network device.

In addition, for technical effects of the communication apparatus according to the sixth aspect, refer to the technical effects of the method according to either of the first aspect and the second aspect. Details are not described herein again.

According to a seventh aspect, a chip is provided. The chip includes a controller and an interface circuit. The controller is configured to interact with another apparatus through the interface circuit, to perform the method according to either of the first aspect and the second aspect.

According to an eighth aspect, a communication system is provided. The communication system includes a terminal configured to perform the method according to the first aspect and a network device configured to perform the method according to the second aspect.

According to a ninth aspect, a computer-readable storage medium is provided. The computer-readable storage medium includes a stored computer program or instructions, and when the computer program or the instructions are run, the method according to the first aspect is performed. According to a tenth aspect, a computer program product is provided, including a computer program or instructions. When the computer program or the instructions are run, the method according to the first aspect is performed.

### BRIEF DESCRIPTION OF DRAWINGS

FIG. 1 is a schematic flowchart of a type-1 CG configuration;
FIG. 2 is a schematic flowchart of a type-2 CG configuration;
FIG. 3 and FIG. 4 are diagrams of architectures of communication systems according to embodiments of this application;
FIG. 5 is a schematic flowchart of a CG resource deactivation method according to an embodiment of this application; and
FIG. 6 and FIG. 7 are diagrams of structures of communication apparatuses according to embodiments of this application.

### DESCRIPTION OF EMBODIMENTS

The technical solutions in embodiments of this application may be applied to various communication systems, for example, a wireless fidelity (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system and a worldwide interoperability for microwave access (worldwide interoperability for microwave access, WiMAX) communication system, a 5th generation (5th generation, 5G) mobile communication system like a new radio (new radio, NR) system, and a future communication system like 5.5G and a 6th generation (6th generation, 6G) mobile communication system.

For ease of understanding, the following first describes technical terms in embodiments of this application.

### 1. Extended reality (extended reality, XR)

In recent years, with continuous progress and improvement of XR technologies, related industries have developed vigorously. Nowadays, the extended reality technology has entered various fields closely related to production and life of people, for example, education, entertainment, medical care, environmental protection, transportation, and public health. Extended reality is a general term for various reality-related technologies, including virtual reality (virtual reality, VR), augmented reality (augmented reality, AR), and mixed reality (mixed reality, MR). The virtual reality technology mainly means rendering of visual and audio scenarios to simulate, as much as possible, a sensory stimulus to a user from vision and audio in the real world. The virtual reality technology usually requires the user to wear a head mounted display (head mounted display, HMD) to entirely replace a field of view of the user with simulated visual components, and requires the user to wear a headset to provide accompanying audio for the user. In addition, in the VR, head and motion tracking usually needs to be performed on the user, to update simulated visual and audio content in a timely manner, so that visual and audio content experienced by the user is consistent with motions of the user. The augmented reality technology mainly refers to providing additional visual or auditory information or artificially generated content in a real environment perceived by the user, where the user may obtain the real environment directly, that is, without intermediate sensing, processing, and rendering, or indirectly, that is, through transfer via a sensor or the like; and performing further enhancement and the like. The mixed reality technology is an advanced form of the AR. One implementation of the mixed reality technology is to insert some virtual elements into a physical scenario, to provide the user with immersive experience in which the elements are a part of a real scenario.

### 2. Configured grant (configured grant, CG) transmission

For an XR service, due to a periodic packet arrival feature of the XR service, the CG may be usually used during uplink transmission. A CG transmission method means that in an uplink transmission process, an uplink scheduling resource is used to perform allocation or specification once by using radio resource control (radio resource control, RRC) or a physical downlink control channel (physical downlink control channel, PDCCH), and then a same time-frequency resource may be periodically and repeatedly used to perform uplink transmission. The CG includes two types. In a type 1 (type 1), related parameters of the CG transmission, for example, a radio network temporary identifier (configured scheduling radio network temporary identifier, CS-RNTI), a CG periodicity, and CG resources such as a time domain resource and a frequency domain resource, are configured by using RRC, and a corresponding CG resource is activated by using RRC signaling. A resource configuration manner of a type 2 (type 2) is similar to that of semi-persistent scheduling (semi-persistent scheduling, SPS). To be specific, related parameters of the CG transmission, for example, a CS-RNTI and a CG periodicity, are configured by using RRC, and then a corresponding CG resource is indicated and activated by using a PDCCH. The following separately provides descriptions.

### Type 1:

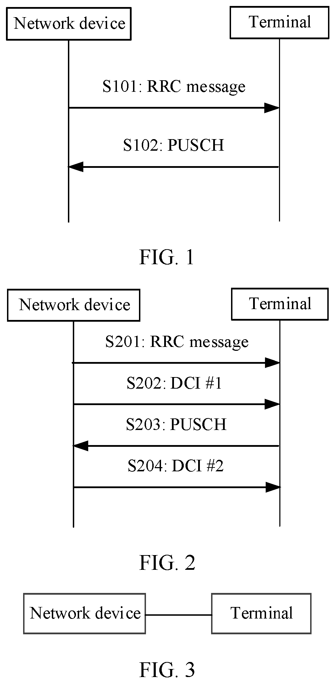

As shown in FIG. 1, a type-1 CG configuration and activation procedure is as follows.

S101: A network device sends an RRC message to a terminal. The terminal receives the RRC message from the network device.

The RRC message may carry a CG configuration, and mainly includes one or more of the following parameters of a CG resource: a CS-RNTI, a CG periodicity, a hybrid automatic repeat request (hybrid automatic repeat request, HARQ) process number (process number) and an offset value, a specific value of a modulation and coding scheme (modulation and coding scheme, MCS), a quantity of repetitions, frequency domain resource allocation (frequency domain resource allocation, FDRA) indicating a resource that needs to be occupied by a user in frequency domain, or time domain resource allocation (time domain resource allocation, TDRA) indicating a symbol (symbol) that needs to be occupied by the user in a slot (slot) and a specific slot in which uplink data is sent.

S102: The terminal sends a physical uplink shared channel (physical uplink shared channel, PUSCH) to the network device. The network device receives the PUSCH from the terminal.

The PUSCH (uplink data) may be carried on the CG resource for sending.

The RRC message may be further used to activate the CG resource. For example, the terminal may determine, based on the CG configuration indicated by the RRC message, a slot in which the CG resource periodically takes effect (that is, the CG resource is activated), to periodically send the PUSCH. That the CG resource is in an active state or an activated CG resource may indicate that the CG resource is in an available state, in other words, in a usable state.

### Type 2:

As shown in FIG. 2, a type-2 CG configuration and activation procedure is as follows.

S201: A network device sends an RRC message to a terminal. The terminal receives the RRC message from the network device.

The RRC message may carry a CG configuration, and mainly includes one or more of the following: a CS-RNTI, a CG periodicity, or the like.

S202: The network device sends DCI #1 to the terminal. The terminal receives the DCI #1 from the network device.

For uplink data (PUSCH) transmission, the network device may indicate, by using a PDCCH, specifically, the DCI #1 carried on the PDCCH, to specifically allocate one or more of the following parameters to CG transmission: a HARQ process number and an offset value, a specific value of an MCS, a quantity of repetitions, a time-frequency resource, or the like. A format requirement of another field of the DCI may be similar to a format of DCI for activating SPS. S203: The terminal sends the PUSCH to the network device. The network device receives the PUSCH from the terminal.

The DCI #1 may be further used to activate a CG resource. For example, the terminal may determine, based on the CG resource indicated by the DCI #1, a slot in which the CG resource periodically takes effect, to periodically send the PUSCH.

S204: The network device sends DCI #2 to the terminal. The terminal receives the DCI #2 from the network device.

If a corresponding CG resource needs to be released, the network device indicates, by using DCI (for example, the DCI #2), to release a specific CG resource. For example, a format of the DCI #2 needs to meet the following conditions.
(1) Cyclic redundancy check (cyclic redundancy check, CRC) is scrambled by using the CS-RNTI provided in the RRC message in S201.
(2) A HARQ process number is set to all zeros.
(3) A new data indicator (new data indicator, NDI) is set to all zeros.
(4) A redundancy version (redundancy version, RV) is set to all zeros.
(5) An MCS is set to all zeros.
(6) FDRA is set to all ones (in special scenarios, the FDRA is set to all zeros).

When the terminal is configured with a plurality of CG resources, the HARQ process number is not set to all zeros, but indicates a HARQ process number corresponding to a corresponding activated CG resource.

### 3. Multi-modal service

As a new service, the multi-modal service has an additional haptic experience dimension on a basis of XR, so that remote touch and remote control can be implemented, and multi-faceted remote perception can be implemented in vision, hearing, haptic sense, kinesthesis, and the like. Therefore, the multi-modal service has great development space in related fields such as industrial automation, medical care, and remote education, provides comprehensive interactive experience for users, and has great application value and business potential.

Specifically, a haptic signal has different service features before and after encoding. Before encoding, a signal generated by each haptic sensor is periodic, 500 to 2000 packets are generated per second, and a size of each packet ranges from 12 to 48 bytes. After haptic encoding, a signal generated by each haptic sensor arrives randomly, a time interval between two arrivals complies with generalized Pareto distribution, and a size of a packet arriving each time remains unchanged. In addition, although a size of an arriving packet for each haptic sensor remains unchanged after encoding, considering a case in which one user simultaneously uses a plurality of haptic sensors, because each sensor generates a signal independently, data arriving at a network per user may be uneven. In a current 3rd generation partnership project (3rd generation partnership project, 3GPP) standard, it is defined that a transmission reliability requirement of a signal on which haptic encoding is not performed is 99.9%, and a delay requirement is 5 milliseconds (ms); and a transmission reliability requirement of an encoded haptic signal is 99.999%, and a delay requirement is 5 ms.

However, for a CG resource, a total amount of data that can be transmitted each time is fixed. However, arrival time of the encoded haptic signal is irregular, in other words, is random. Consequently, a data amount of a haptic signal that needs to be uploaded in each uplink slot is not fixed. A data amount of a haptic signal in current uplink transmission may be greater than the total amount of data that can be transmitted each time by using the CG resource. Consequently, transmission of the haptic signal needs to be divided into a plurality of times, a transmission delay is increased, and even a packet loss may occur, affecting service continuity.

For the foregoing technical problems, embodiments of this application provide the following technical solutions.

The following describes technical solutions of this application with reference to accompanying drawings.

In embodiments of this application, "indicate" may include a direct indication and an indirect indication, or may include an explicit indication and an implicit indication. Information indicated by a specific piece of information is referred to as to-be-indicated information. In a specific implementation process, the to-be-indicated information is indicated in a plurality of manners, for example, but not limited to, the following manners: The to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of various pieces of information that is pre-agreed on (for example, specified in a protocol), to reduce indication overheads to some extent. In addition, a common part of various pieces of information may be further identified and indicated together, to reduce indication overheads caused by separately indicating same information.

In addition, specific indication manners may alternatively be various existing indication manners, for example, but not limited to, the foregoing indication manners and various combinations thereof. For details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can cause a to-be-indicated party to learn of the to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

In this application, "sending information" may be understood as that a device sends information to another device, or may be understood as that a logical module in the device sends information to another logical module. For example, "an access network device sends information" may be understood as that the access network device sends information to another device (for example, a terminal), or may be understood as that a logical module 1 in the access network device sends information to a logical module 2 in the access network device.

In this application, "receiving information" may be understood as that a device receives information from another device, or may be understood as that a logical module in the device receives information from another logical module. For example, "the access network device receives information" may be understood as that the access network device receives information from another device (for example, the terminal), or may be understood as that the logical module 1 in the access network device receives information from the logical module 2 in the access network device.

In this application, "sending information to... (for example, the terminal)" or a related illustration in the accompanying drawings may be understood as that a destination end of the information is the terminal, and may include directly or indirectly sending the information to the terminal. "Receiving information from... (for example, the terminal)" or "receiving information that is from... (for example, the terminal)" or "receiving information sent by (for example, the terminal)" or a related illustration in the accompanying drawings may be understood as that a source end of the information is the terminal, and may include directly or indirectly receiving the information from the terminal. Necessary processing, for example, a format change, may be performed on the information between the source end and the destination end of information sending, but the destination end may understand valid information from the source end. A similar expression in this application may be understood similarly, and details are not described herein again.

"Predefinition" or "preconfiguration" in this application may be implemented by pre-storing corresponding code or a corresponding table in a device, or may be implemented in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when ...", "in a case of ...", and "if" all mean that a device performs corresponding processing in an objective case, and do not limit time, and the device is not required to perform a determining action during implementation. This does not mean that there is another limitation.

In descriptions of embodiments of this application, unless otherwise specified, "/" indicates an "or" relationship between associated objects. For example, A/B may indicate A or B. In embodiments of this application, "and/or" describes only an association relationship between the associated objects, and indicates that three relationships may exist. For example, A and/or B may indicate three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically same functions or purposes. A person skilled in the art may understand that the words such as "first" and "second" do not limit a quantity or an execution sequence, and the words such as "first" and "second" do not indicate a definite difference. In addition, in embodiments of this application, words such as "example" and "for example" are used to represent giving an example, an illustration, or descriptions. Any embodiment or design solution described as an "example" or "for example" in embodiments of this application should not be explained as being more preferred or having more advantages than another embodiment or design solution. Exactly, use of the terms such as "example" and "for example" is intended to present a related concept in a specific manner for ease of understanding. A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

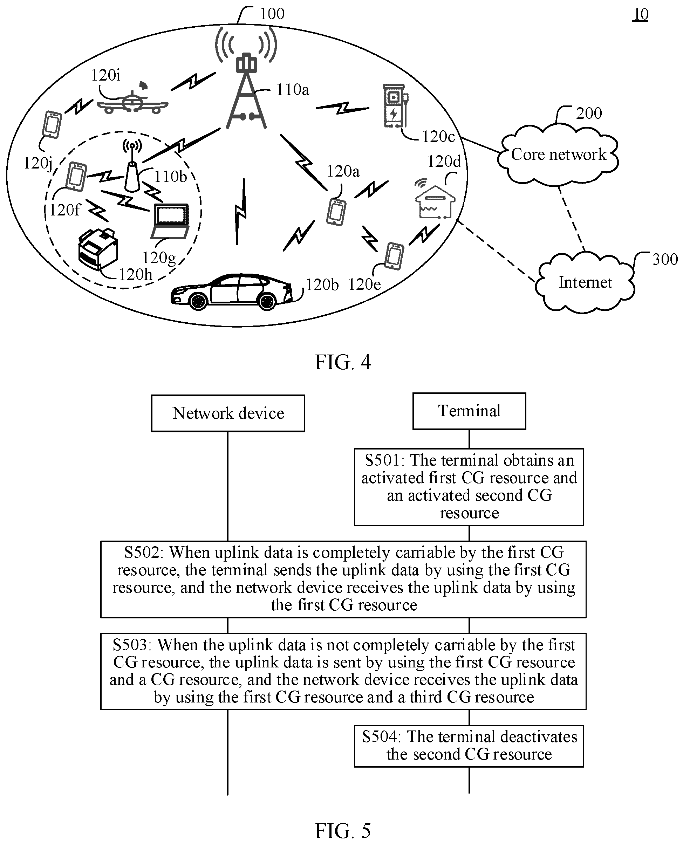

For ease of understanding of embodiments of this application, a communication system is first used as an example to describe in detail a communication system applicable to embodiments of this application. For example, as shown in FIG. 3, the communication system mainly includes at least one of the following: a terminal and a network device, for example, an access network device. For example, a possible and non-limiting architecture of the communication system may be shown in FIG. 4. As shown in FIG. 4, the communication system 10 includes a radio access network (radio access network, RAN) 100 and a core network (core network, CN) 200. The RAN 100 includes at least one RAN node (for example, 110a and 110b in FIG. 4, which are collectively referred to as 110) and at least one terminal (for example, 120a to 120j in FIG. 4, which are collectively referred to as 120). The RAN 100 may further include another RAN node, for example, a wireless relay device and/or a wireless backhaul device (not shown in FIG. 4). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6G mobile communication system). Alternatively, the RAN 100 may be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, the network element 120i in FIG. 4 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Both the RAN node 110 and the terminal 120 are sometimes referred to as communication apparatuses. For example, the network elements 110a and 110b in FIG. 4 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 4), a micro base station or an indoor station (for example, 110b in FIG. 4), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

It may be understood that the foregoing RAN node may be a newly defined name, and the RAN node may also have different descriptions, such as an access node, a network device, and a radio access node. This is not limited. In this application, unless otherwise specified, the network device is used for description below.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application. In the communication system, the network device may configure and activate a plurality of CG resources for the terminal, for example, a first CG resource and a second CG resource, so that when uplink data is completely carriable by the first CG resource, the terminal can send the uplink data by using the first CG resource, or when the uplink data is not completely carriable by the first CG resource, the terminal device can send the uplink data by using the first CG resource and a part or all of the second CG resource. That is, the terminal may select one or more CG resources that adapt to a current uplink quantity to perform CG transmission, so as to improve flexibility of CG transmission, avoid an increase in a transmission delay caused because the CG resource cannot completely carry data that needs to be transmitted, and ensure service continuity. In addition, for a CG resource that does not need to be used by the terminal, for example, the second CG resource, the terminal may deactivate the second CG resource, so that a network can schedule the second CG resource to another terminal for use, to improve resource utilization.

The following further describes a CG resource deactivation method and an apparatus with reference to the accompanying drawings. It may be understood that, in this application, an example in which a network device and a terminal are used as execution bodies of interaction illustration is used for description. However, an execution body of the interaction illustration is not limited in this application. For example, a method performed by the network device in this application may alternatively be performed by a module (for example, a chip, a chip system, or a processor) used in the network device, or may be implemented by a logical node, a logical module, or software that can implement all or a part of functions of the network device. A method performed by the terminal in this application may alternatively be performed by a module (for example, a chip, a chip system, or a processor) used in the terminal, or may be implemented by a logical node, a logical module, or software that can implement all or a part of functions of the terminal.

With reference to FIG. 5, the following specifically describes an interaction procedure between network elements/devices in the foregoing communication system by using method embodiments. The CG resource deactivation method provided in embodiments of this application is applicable to the foregoing communication system, and is specifically applied to various scenarios mentioned in the foregoing communication system. The following provides detailed descriptions.

FIG. 5 is a schematic flowchart of a CG resource deactivation method according to an embodiment of this application. The CG resource deactivation method is applicable to the foregoing communication system, and mainly relates to interaction between a terminal and a network device. As shown in FIG. 5, a procedure of the CG resource deactivation method is as follows.

S501: The terminal obtains an activated first CG resource and an activated second CG resource.

The first CG resource may be a dedicated resource, in other words, may be a dedicated uplink transmission resource configured for one terminal, and is usually configured for one terminal. A terminal other than the terminal cannot use the dedicated resource. Certainly, the dedicated resource is merely an example name, and may alternatively be replaced with any possible name. This is not limited.

The first CG resource may include at least one of the following: a first time domain resource, a first frequency domain resource, or a first space domain resource.

The first time domain resource may be a resource at a granularity of a time domain unit, for example, may include at least one time domain unit. These time domain units may be contiguous or non-contiguous. This is not specifically limited. The time domain unit may be a radio frame (radio frame), a frame (frame), a subframe (subframe), a slot (slot), a mini-slot (mini-slot), a symbol (symbol), or a time domain unit at any possible granularity.

The first frequency domain resource may be a resource at a granularity of a frequency domain unit, for example, may include at least one frequency domain unit. These frequency domain units may be contiguous or non-contiguous. This is not limited. The frequency domain unit may be a resource element (resource element, RE), a resource block (resource block, RB), a resource block group (resource block group, RBG), a bandwidth part (bandwidth part, BWP), bandwidth (bandwidth), or a frequency domain unit at any possible granularity.

The first space domain resource may be represented by using a port in space domain, for example, a channel state information reference signal (channel state information reference signal, CSI-RS) port, a sounding reference signal (sounding reference signal, SRS) port, a demodulation reference signal (demodulation reference signal, DMRS) port, a phase-tracking reference signal (phase-tracking reference signal, PTRS) port, a cell-specific reference signal (cell-specific reference signal, CRS) port, a tracking reference signal (tracking reference signal, TRS) port, or an SSB port; an antenna port group; or the like. Port numbers of these ports may be contiguous or non-contiguous. This is not limited. Different space domain resources may be distinguished by using different port numbers, for example, a DMRS port 1000 and a DMRS port 1001.

The activated first CG resource means that the first CG resource is in an available state, in other words, in a usable state. On the contrary, if the first CG resource is deactivated, it indicates that the first CG resource is in an unavailable state, in other words, in an unusable state. In this case, the first CG resource may be released, or is not released, but is unavailable before being activated again.

The second CG resource may be a shared resource, in other words, may be an uplink transmission resource configured for a plurality of terminals to share. In other words, the shared resource may be configured for a plurality of terminals, so that the plurality of terminals share the resource to perform uplink transmission. A terminal that is not configured with the shared resource cannot use the shared resource. Certainly, the shared resource is merely an example name, and may alternatively be replaced with any possible name. This is not limited.

The second CG resource may include a plurality of CG resources, and may specifically include at least one of the following: a second time domain resource, a second frequency domain resource, or a second space domain resource. For specific implementation, refer to related descriptions of the first CG resource. Details are not described herein again. For example, time division may be performed between the second CG resource and the first CG resource. In this case, the second CG resource and the first CG resource may multiplex at least a part of same frequency domain resources and/or space domain resources. In other words, frequency domain positions of the first frequency domain resource and the second frequency domain resource at least partially overlap, and/or the first space domain resource and the second space domain resource are at least partially the same. For example, frequency division may alternatively be performed between the second CG resource and the first CG resource. In this case, the second CG resource and the first CG resource may multiplex at least a part of same time domain resources and/or space domain resources. In other words, time domain positions of the first time domain resource and the second time domain resource at least partially overlap, and/or the first space domain resource and the second space domain resource are at least partially the same. For example, space division may alternatively be performed between the second CG resource and the first CG resource. In this case, the second CG resource and the first CG resource may multiplex at least a part of same time domain resources and/or frequency domain resources. In other words, time domain positions of the first time domain resource and the second time domain resource at least partially overlap, and/or frequency domain positions of the first frequency domain resource and the second frequency domain resource at least partially overlap.

The activated second CG resource means that the second CG resource is in an available state, in other words, in a usable state. On the contrary, if the second CG resource is deactivated, it indicates that the second CG resource is in an unavailable state, in other words, in an unusable state. In this case, the second CG resource may be released, or is not released, but is unavailable before being activated again.

In this embodiment of this application, the terminal may obtain the activated first CG resource and the activated second CG resource in a plurality of manners. For example, the terminal may obtain the activated first CG resource and the activated second CG resource locally, or obtain the activated first CG resource and the activated second CG resource based on an indication of another device. The following separately provides descriptions.

In a first possible implementation, the network device sends a first message, and the terminal receives the first message. The first message may be an RRC message or DCI, and is used to indicate and activate the first CG resource and the second CG resource. In other words, the first CG resource and the second CG resource may be dynamically configured by the network device for the terminal based on an actual requirement, to implement configuration as required.

Case 1: The first message is RRC, and is denoted as a first RRC message. In an implementation, the first CG resource is indicated by using an existing information element in the first RRC message, and the second CG resource is indicated by defining a new information element.

The first RRC message may include a configured grant (ConfiguredgrantConfig) information element. An existing field in the configured grant information element may be configured to indicate the first CG resource. For example, the existing field may include at least one of the following: a time domain reference subframe number (timeReferenceSFN), time domain offset information (timeDomainOffset), time domain position information (timeDomainAllocation), a CG resource periodicity, frequency domain position information (frequencyDomainAllocation), or space domain position information. The time domain reference subframe number is used to determine a system frame number of an offset of a resource in time domain, namely, a reference system frame number. The time domain offset information indicates an offset corresponding to the reference system frame number. A start and length indication value (start and length indication value, SLIV) in the time domain position information may be used to provide a start symbol and a length of a slot in which a CG transmission occasion is located. In this way, the information may be combined to indicate the time domain position of the first time domain resource, for example, a specific symbol in a specific slot, which may also be understood as a transmission occasion of CG transmission. The frequency domain position information may indicate the frequency domain position of the first frequency domain resource. For example, the frequency domain resource is a resource at an RBG granularity, in other words, the frequency domain unit is at the RBG granularity. The frequency domain position information may be a bitmap (bitmap), to indicate RBGs included in the first frequency domain resource, for example, a plurality of contiguous or non-contiguous RBGs. Because frequency domain positions of these RBGs are preset, indicating the RBGs means indicating the frequency domain position of the first frequency domain resource. The space domain position information may indicate a space domain position of the first space domain resource, for example, include an antenna port number that is of an antenna port (antenna port) and that is used to configure the first space domain resource, DMRS sequence initialization (dmrs-SeqInitialization) used to determine a DMRS sequence of the first space domain resource, and an SRS resource indicator (srs-ResourceIndicator) indicating an SRS resource used for the first space domain resource.

A new field is defined in the first RRC message, and the new field may be carried in the foregoing configured grant information element, or may be carried in any other possible information element. The new field may be configured to indicate the second CG resource. For example, the new field may include at least one of the following: time domain reference subframe number shared information (timeReferenceSFN_share), time domain offset shared information (timeDomainOffset_share), time domain position shared information (timeDomainAllocation_share), frequency domain position shared information (frequencyDomainAllocation_share), or space domain position shared information. The time domain reference subframe number shared information is used to determine a system frame number of an offset of a shared resource in time domain, namely, a reference system frame number. The time domain offset shared information indicates an offset corresponding to the reference system frame number. An SLIV in the time domain position shared information may be used to provide a start symbol and a length of a slot in which a CG transmission occasion is located. In this way, the shared information may be combined to indicate the time domain position of the second time domain resource, for example, a specific symbol in a specific slot. The frequency domain position shared information may indicate the frequency domain position of the second frequency domain resource. For example, the frequency domain resource is a resource at the RBG granularity. The frequency domain position shared information may also be a bitmap, to indicate RBGs included in the second frequency domain resource, for example, a plurality of contiguous or non-contiguous RBGs. Because frequency domain positions of these RBGs are preset, indicating the RBGs means indicating the frequency domain position of the second frequency domain resource. The space domain position shared information may indicate a space domain position of the second space domain resource, for example, include an antenna port number that is of an antenna port and that is used to configure the second space domain resource, DMRS sequence initialization used to determine a DMRS sequence of the second space domain resource, and an SRS resource indicator indicating an SRS resource used for the second space domain resource.

It may be understood that the time domain offset shared information is merely an example name, and may alternatively be replaced with any possible name, for example, shared time domain offset information, or any information indicating that a time domain offset can be shared may fall within the protection scope of this application. Similarly, the time domain position shared information is merely an example name, and may alternatively be replaced with any possible name, for example, shared time domain position information, or any information indicating that a time domain position can be shared may fall within the protection scope of this application. Similarly, the frequency domain position shared information is merely an example name, and may alternatively be replaced with any possible name, for example, shared frequency domain position information, or any information indicating that a frequency domain position can be shared may fall within the protection scope of this application.

It may be further understood that, if time division is performed between the first CG resource and the second CG resource, and the frequency domain positions of the first frequency domain resource and the second frequency domain resource completely overlap, the first RRC message may not include the frequency domain position shared information or the frequency domain position information, to reduce communication overheads. Alternatively, if frequency division is performed between the first CG resource and the second CG resource, and the time domain positions of the first time domain resource and the second time domain resource completely overlap, the first RRC message may not include the time domain offset shared information or the time domain offset information, or may not include the time domain position shared information or the time domain position information, to reduce communication overheads. Alternatively, if space division is performed between the first CG resource and the second CG resource, the time domain positions of the first CG resource and the second CG resource completely overlap, and the frequency domain positions of the first CG resource and the second CG resource completely overlap, the first RRC message may not include the time domain offset shared information or the time domain offset information, may not include the time domain position shared information or the time domain position information, or may not include the frequency domain position shared information or the frequency domain position information. In this way, communication overheads can also be reduced. In addition, that the frequency domain resource is the resource at the RBG granularity is merely an example. The frequency domain resource may alternatively be a resource at another granularity, for example, a BW granularity, a BWP granularity, an RB granularity, or an RE granularity. In this case, specific implementation of the frequency domain position information or the frequency domain position shared information is also similar to the foregoing. For details, refer to the foregoing for understanding. Details are not described herein again. In addition, the RBG may alternatively be replaced with another equivalent expression, for example, a carrier (carrier) group. Similarly, the RB may alternatively be replaced with another equivalent expression, for example, a carrier (carrier). Similarly, the RE may alternatively be replaced with another equivalent expression, for example, a subcarrier (subcarrier).

It should be understood that the first RRC message may further indicate other parameters of the first CG resource and the second CG resource, such as a CS-RNTI and a periodicity. For specific implementation, refer to related descriptions in the foregoing "2. CG". Details are not described herein again.

It should be further understood that, if the terminal receives the first RRC message, the terminal activates, by default, the first CG resource and the second CG resource that are indicated by the first RRC message. In addition, the first RRC message usually cannot indicate only the second CG resource. In other words, the second CG resource needs to be indicated when the first CG resource is indicated, to avoid an uplink transmission conflict.

Case 2: The first message is DCI. In an implementation, different DCI is used to respectively indicate and activate the first CG resource and the second CG resource. For example, a first DCI message may be used to indicate and activate the first CG resource, and a second DCI message may be used to indicate and activate the second CG resource. Specific implementation is similar to that of the first RRC message. For details, refer to the foregoing for understanding. Details are not described herein again.

For example, a new field may be further added to the DCI or an existing field may be reused to indicate that the DCI is used to indicate and activate a dedicated resource or a shared resource. For example, a 1-bit field is newly added to the DCI, and two values 0/1 of the field respectively indicate the dedicated resource and the shared resource. In this case, the first DCI message may carry a field whose value is 0, to indicate and activate the first CG resource as the dedicated resource. Similarly, the second DCI message may carry a field whose value is 1, to indicate and activate the second CG resource as the shared resource. For another example, a field in the existing DCI may be reused, for example, an RV field is used. If the RV field is all zeros, it indicates that the dedicated resource is currently activated. In other words, an RV field in the first DCI message is all zeros, to indicate and activate the first CG resource as the dedicated resource. If the RV field is not all zeros, it indicates that the shared resource is currently activated. In other words, an RV field in the second DCI message is not all zeros, to indicate and activate the second CG resource as the shared resource. Certainly, that the RV field is all zeros or not all zeros is merely an example of a value, and another value may alternatively be used to indicate the dedicated resource or the shared resource. This is not limited.

It should be understood that, the foregoing uses an example in which different DCI is used to respectively indicate and activate the first CG resource and the second CG resource. This is not limited. Alternatively, one piece of DCI may be used to indicate and activate the first CG resource and the second CG resource.

It should be further understood that, if the terminal receives the first DCI, the terminal activates, by default, the first CG resource indicated by the first DCI. Similarly, if the terminal receives the second DCI, the terminal activates, by default, the second CG resource indicated by the second DCI. In addition, the DCI usually cannot indicate only the second CG resource. In other words, the network device needs to send the second DCI to indicate and activate the first CG resource only when the network device has sent the first DCI to indicate and activate the first CG resource, to avoid an uplink transmission conflict.

In addition, when the first CG resource and the second CG resource are separately indicated and activated by using the DCI, related parameters of the first CG resource and the second CG resource, such as a CG periodicity and a CS-RNTI, may be further configured by using the RRC.

In a second possible implementation, the first CG resource and the second CG resource may alternatively be predefined by the terminal and the network device, and do not need to be dynamically configured, to avoid overheads caused by configuration. For example, local configuration information/parameters of the first CG resource and the second CG resource on the terminal are similar to information/parameters indicated by the RRC message or the DCI message. When the terminal (for example, an application layer) has an uplink data transmission requirement, the terminal may locally obtain the first CG resource and the second CG resource (which may be specifically determining time domain positions, frequency domain positions, or space domain positions to which the first CG resource and the second CG resource are mapped in current transmission, for example, specific port numbers in space domain), and activate the first CG resource and the second CG resource when the first CG resource and the second CG resource are in an inactive state. Certainly, if the first CG resource and the second CG resource have been activated, the terminal does not need to activate the first CG resource and the second CG resource again.

S502: When uplink data is completely carriable by the first CG resource, the terminal sends the uplink data by using the first CG resource. Correspondingly, the network device receives the uplink data by using the first CG resource.

S503: When the uplink data is not completely carriable by the first CG resource, send the uplink data by using the first CG resource and a CG resource. Correspondingly, the network device receives the uplink data by using the first CG resource and a third CG resource.

The uplink data may be data that needs to be sent in uplink for a service (for example, an XR service, which may be specifically a multi-modal service) of the terminal, for example, data of a haptic signal, or data of another possible signal. The third CG resource may be a part or all of the second CG resource.

Because the uplink data needs to be transmitted by using the CG resource, when the service of the terminal generates the uplink data, in other words, when the uplink data arrives at the service of the terminal, the terminal may determine whether the uplink data is completely carriable by the first CG resource. If a data amount of the uplink data is less than or equal to a maximum amount of data carriable by the first CG resource, it indicates that the uplink data is completely carriable by the first CG resource, and the terminal performs S502. If the data amount of the uplink data is greater than the maximum amount of data carriable by the first CG resource, it indicates that the uplink data is not completely carriable by the first CG resource. In this case, the terminal may determine that a part that is of the uplink data and that cannot be carried by the first CG resource needs to be carried by the third CG resource in the second CG resource, and therefore performs S503.

It may be understood that in S502 or S503, sending the uplink data may alternatively be understood as transmitting a PUSCH or any other possible expression. Details are not described herein again. S504: The terminal deactivates the second CG resource.

The second CG resource may be deactivated in a plurality of manners. For example, the second CG resource and the first CG resource may be separately deactivated. In other words, deactivation of the second CG resource and deactivation of the first CG resource are decoupled. Alternatively, the second CG resource and the first CG resource may be jointly deactivated. For example, if the first CG resource is deactivated, the second CG resource is also deactivated; or if the first CG resource is activated, the second CG resource remains activated. The following separately provides descriptions.

In a possible implementation, the network device may send first information, and the terminal may receive the first information. The first information may indicate to deactivate the second CG resource, or the first information may indicate to deactivate the first CG resource. For example, the first information may be carried in at least one of the following: an RRC message, DCI, or a MAC-CE. That is, an existing message is reused for implementation, to reduce implementation difficulty and complexity. Alternatively, a newly defined message may be used for implementation, to decouple from the existing message, so that information element transfer can be more flexible. The DCI is used as an example. Another message may be understood similarly, and details are not described again. The first information may be a newly added field in the DCI. For example, the field may be 1 bit, and two values 0/1 of the field respectively indicate to deactivate the first CG resource and the second CG resource. Alternatively, the first information may be an existing field in the DCI, for example, an RV version. If the RV version is 00, it indicates that the first CG resource is to be deactivated. If the RV version is 01, it indicates that the second CG resource is to be deactivated. In this way, the terminal may deactivate the first CG resource or the second CG resource based on the first information, to implement deactivation as required based on an indication. This avoids affecting service continuity due to an increase in a transmission delay caused because the terminal autonomously deactivates the first CG resource or the second CG resource when the first CG resource or the second CG resource does not need to be deactivated. In another possible implementation, the network device may send second information, and the terminal may receive the second information. The second information is received, where the second information may be an existing message like an RRC message, DCI, or a MAC-CE, or may be a newly defined message. This is not limited. The second information may indicate duration of a timer, and the timer may be used for deactivation timing of the first CG resource and/or the second CG resource. In other words, when the timer expires, the terminal may deactivate the first CG resource and/or the second CG resource. For example, the timer is used for activation timing of the second CG resource. The first CG resource may be understood similarly, and details are not described again. When the second CG resource is activated, or from a symbol of a 1^{st} PUSCH of the activated second CG resource, the terminal may start the timer, for example, set the duration of the timer to 0 and start timing, and then deactivate the second CG resource when the timer expires. In this way, deactivation can be implemented as required based on an indication. This avoids affecting service continuity due to an increase in a transmission delay caused because the terminal autonomously deactivates the second CG resource when the second CG resource does not need to be deactivated.

It may be understood that the second information may alternatively be used to trigger activation of the first CG resource and/or the second CG resource. For example, the second information may be carried in the first DCI, to indicate the first CG resource and activate the first CG resource. In addition, the second information may alternatively be carried in the second DCI, to indicate the second CG resource and activate the second CG resource. For another example, the second information may alternatively be separately delivered. In this case, the first DCI and the second DCI may only indicate the CG resource, but may not be used to activate the CG resource.

In still another possible implementation, the network device may send third information, and the terminal may receive the third information. The third information may indicate to deactivate the first CG resource. For example, the third information may be carried in at least one of the following: an RRC message, DCI, or a MAC-CE. That is, an existing message is reused for implementation, to reduce implementation difficulty and complexity. Alternatively, a newly defined message may be used for implementation, to decouple from the existing message, so that information element transfer can be more flexible. The DCI is used as an example. Another message may be understood similarly, and details are not described again. The third information may be a field used by the DCI to indicate to deactivate the CG resource. For details, refer to related descriptions in the foregoing "DCI #2". Details are not described herein again. Alternatively, the third information may be a newly defined field in the DCI. This is not limited. Because the second CG resource and the first CG resource are jointly deactivated, when the third information indicates to deactivate the first CG resource, the terminal may deactivate the second CG resource based on the third information, and the terminal may also deactivate the first CG resource based on the third information.

It may be understood that the foregoing manners of deactivating the second CG resource are merely some examples, and are not limited. For example, alternatively, the terminal may autonomously determine, according to a local policy, to deactivate the second CG resource when there is no uplink transmission requirement currently; current uplink transmission ends; it is estimated that subsequent uplink transmission data of a service decreases, and the first CG resource alone is sufficient; or the like, and notify a network of deactivation, so that the network can schedule the second CG resource to another terminal for use, to improve resource utilization.

It may be further understood that "deactivation" mentioned in this embodiment of this application may alternatively be replaced with any possible expression, for example, "reactivation". For example, the shared resource and the dedicated resource are respectively reactivated by using two pieces of DCI. In this case, the shared resource may be separately reactivated.

In conclusion, a plurality of CG resources, for example, the first CG resource and the second CG resource, are configured and activated for the terminal, so that the terminal can select one or more CG resources (for example, the first CG resource, or the first CG resource and a part or all of the second CG resource) that adapt to a current uplink quantity to perform CG transmission, to improve flexibility of the CG transmission, avoid an increase in a transmission delay caused because a CG resource cannot completely carry data that needs to be transmitted, and ensure service continuity. In addition, for a CG resource that does not need to be used by the terminal, for example, the second CG resource, the terminal may deactivate the second CG resource, so that the network can schedule the second CG resource to another terminal for use, to improve the resource utilization.

With reference to the foregoing method, in a possible design solution, in the method, the network device may further send fourth information, and the terminal may also receive the fourth information. The fourth information indicates a resource priority in the second CG resource, for example, a priority of a frequency domain resource and/or a priority of a space domain resource, and for second CG resources configured for different terminals, resource priorities may be different, to avoid a probability that a resource conflict occurs when the second CG resource is shared by a plurality of terminals.

For example, the priority of the frequency domain resource is used as an example. For the priority of the space domain resource, refer to the priority of the frequency domain resource for understanding. Details are not described again. The fourth information may include an index of the frequency domain resource. Indexes of frequency domain resources in ascending order or descending order may indicate priorities of the frequency domain resources in descending order or ascending order. For example, it is assumed that the frequency domain resources in the second CG resource include an RBG 0 to an RBG 3. Fourth information configured by the network device for UE 1 may include indexes that are of the frequency domain resources and that are sequentially the RBG 0 to the RBG 3 in ascending order. It indicates that priorities of RBGs configured for the UE 1 are sequentially the RBG 0 to the RBG 3 in descending order. In other words, the UE 1 needs to preferentially use the RBG 0, and then use the RBG 1, the RBG 2, and the RBG 3. Fourth information configured by the network device for UE 2 may include the indexes that are of the frequency domain resources and that are sequentially the RBG 3 to the RBG 0 in descending order. It indicates that priorities of RBGs configured for the UE 2 are sequentially the RBG 3 to the RBG 0 in descending order. In other words, the UE 2 needs to preferentially use the RBG 3, and then use the RBG 2, the RBG 1, and the RBG 0.

For another example, the priority of the frequency domain resource is used as an example. For the priority of the space domain resource, refer to the priority of the frequency domain resource for understanding. Details are not described again. The fourth information may include a bitmap, and different bitmaps indicate different priorities of the frequency domain resources. For example, it is assumed that the frequency domain resources in the second CG resource include an RBG 0 to an RBG 3. A bitmap configured by the network device for UE 1 is 0001, to indicate that for the UE 1, priorities of the RBG 0 to the RBG 3 are sequentially the RBG 0, the RBG 1, the RBG 2, and the RBG 3 in descending order. A bitmap configured by the network device for UE 2 is 1000, to indicate that for the UE 2, priorities of the RBG 0 to the RBG 3 are sequentially the RBG 3, the RBG 2, the RBG 1, and the RBG 0 in descending order.

For still another example, the priority of the frequency domain resource is used as an example. For the priority of the space domain resource, refer to the priority of the frequency domain resource for understanding. Details are not described again. The terminal may locally preconfigure a priority list, and the priority list may include various different frequency domain resource priorities. The fourth information may include an index of a frequency domain resource priority in the priority list. In this way, the terminal may traverse the priority list based on the index, to determine a frequency domain resource priority that needs to be used by the terminal. For example, it is assumed that the frequency domain resources in the second CG resource include an RBG 0 to an RBG 3. An example of the priority list may be shown in Table 1.

**Table 1**

| Index | Frequency domain resource priority |
|---|---|
| 1 | RBG 0, RBG 1, RBG 2, and RBG 3 |
| 2 | RBG 2, RBG 3, RBG 0, and RBG 1 |
| 3 | RBG 3, RBG 1, RBG 2, and RBG 0 |
| ... | ... |

If fourth information received by UE 1 includes the index 1, it may indicate that a frequency domain resource priority of the UE 1 is sequentially the RBG 0, the RBG 1, the RBG 2, and the RBG 3 in descending order; if fourth information received by UE 1 includes the index 2, it may indicate that a frequency domain resource priority of the UE 2 is sequentially the RBG 2, the RBG 3, the RBG 0, and the RBG 1 in descending order; and so on. Details are not described again.

It may be understood that the fourth information may be delivered together with the foregoing information, for example, the first information or the second information, to reduce communication overheads, or the fourth information may be separately delivered. This is not limited.

With reference to the foregoing method, in a possible design solution, in the method, the network device may further send fifth information, and the terminal may also receive the fourth information. The fifth information may be carried in the first CG resource, to indicate that the third CG resource has been used for uplink transmission, so that the network can directly obtain the uplink data from the third CG resource without performing blind detection on the second CG resource, to reduce receiving complexity of the network.

The fifth information may be of an enumeration type, and different padding values in the enumeration type may represent different used resources. In other words, a quantity of bits of the fifth information corresponds to a quantity of resources included in the second CG resource, and two values of each bit may indicate whether a resource corresponding to the bit is used. The frequency domain resource is used as an example. For the time domain resource and the space domain resource, refer to the frequency domain resource for understanding. Details are not described again. The foregoing assumption is still used. The fifth information is of an enumeration type with 4 bits that respectively indicate whether the RBG 0 to the RBG 3 are used. If the UE 1 uses only the RBG 0, fifth information reported by the UE 1 is [1, 0, 0, 0], where 1 indicates "used", and 0 indicates "not used". In other words, [1, 0, 0, 0] indicates that the RBG 0 is used, and the RBG 1 to the RBG 3 are not used. If the UE 1 uses only the RBG 3, fifth information reported by the UE 2 is [0, 0, 0, 1], indicating that the RBG 3 is used, and the RBG 2 to the RBG 0 are not used.

Alternatively, the fifth information may be a bitmap, and different bitmaps indicate different used resources. For example, the foregoing assumption is still used. If the UE 1 uses only the RBG 0, fifth information reported by the UE 1 is 01, indicating that the RBG 0 is used, and the RBG 1 to the RBG 3 are not used. If the UE 1 uses only the RBG 0 and the RBG 1, fifth information reported by the UE 1 is 10, indicating that the RBG 0 and the RBG 1 are used, and the RBG 2 and the RBG 3 are not used. By analogy, if the UE 1 uses the RBG 0 to the RBG 3, fifth information reported by the UE 1 is 11, indicating that the RBG 0 to the RBG 3 are all used.

In addition, the fifth information may be carried in UCI. That is, an existing message is reused for implementation, to reduce implementation difficulty and complexity. Alternatively, a newly defined message may be used for implementation, to decouple from the existing message, so that information element transfer can be more flexible. Alternatively, the fifth information may be carried in other signaling/another message, for example, a MAC-CE or RRC. This is not limited. It may be understood that, when there is only the shared resource, for example, the first CG resource is deactivated, and the second CG resource remains activated, it may be defined that the terminal cannot use a part of shared resources. In other words, the terminal uses all shared resources or does not use the shared resources. In this case, the fifth information may be carried in a resource with a highest priority in the second CG resource, to facilitate receiving by the network device.

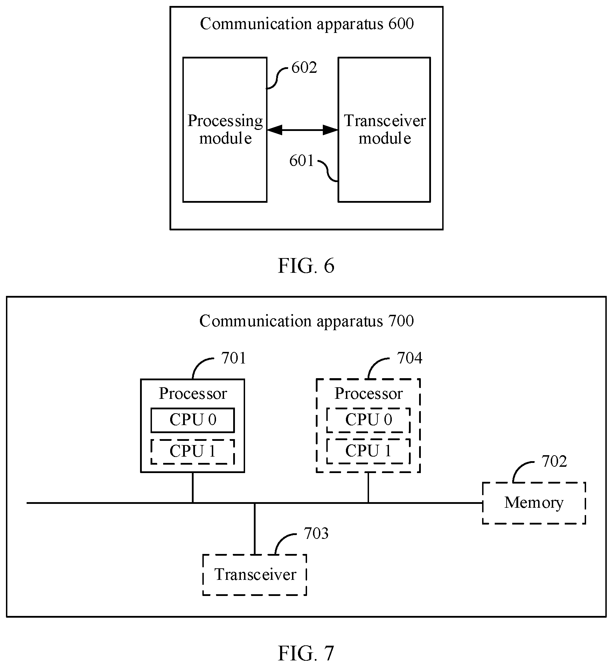

With reference to FIG. 5, the foregoing describes in detail the CG resource deactivation method provided in embodiments of this application. With reference to FIG. 6 and FIG. 7, the following describes in detail a communication apparatus configured to perform the CG resource deactivation method provided in embodiments of this application.

FIG. 6 is a diagram 1 of a structure of a communication apparatus according to an embodiment of this application. For example, as shown in FIG. 6, the communication apparatus 600 includes a transceiver module 601 and a processing module 602. For ease of description, FIG. 6 merely shows main components of the communication apparatus.

The transceiver module 601 is configured to perform receiving and sending functions in the method shown in FIG. 5, and the processing module 602 is configured to perform a function in the method shown in FIG. 5 other than the receiving and sending functions.

Optionally, the transceiver module 601 may include a sending module (not shown in FIG. 6) and a receiving module (not shown in FIG. 6). The sending module is configured to implement a sending function of the communication apparatus 600, and the receiving module is configured to implement a receiving function of the communication apparatus 600.

Optionally, the communication apparatus 600 may further include a storage module (not shown in FIG. 6). The storage module stores a program or instructions. When the processing module 602 executes the program or the instructions, the communication apparatus 600 may perform a function of the terminal or the network device in the method shown in FIG. 5 in the foregoing methods.

It may be understood that the communication apparatus 600 may be a terminal or a network device, may be a chip (system) or another part or component that may be disposed in the terminal or the network device, or may be an apparatus that includes the terminal or the network device. This is not limited in this application.

In addition, for technical effects of the communication apparatus 600, refer to the technical effects of the method shown in FIG. 5. Details are not described herein again.

FIG. 7 is a diagram 2 of a structure of a communication apparatus according to an embodiment of this application. For example, the communication apparatus may be a terminal, or may be a chip (system) or another part or component that may be disposed in the terminal. As shown in FIG. 7, the communication apparatus 700 may include a processor 701. Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following describes each part in the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 701 may perform various functions of the communication apparatus 700 by running or executing a software program stored in the memory 702 and invoking data stored in the memory 702, for example, perform the CG resource deactivation method shown in FIG. 5. In a specific implementation, in an embodiment, the processor 701 may include one or more CPUs, for example, a CPU 0 and a CPU 1 shown in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions). The memory 702 is configured to store a software program for performing the solutions of this application, and the processor 701 controls execution of the software program. For a specific implementation, refer to the foregoing method embodiment, and details are not described herein again.

Optionally, the memory 702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured to communicate with another communication apparatus. For example, the communication apparatus 700 is a terminal, and the transceiver 703 may be configured to communicate with a network device or communicate with another terminal device. For another example, the communication apparatus 700 is a network device, and the transceiver 703 may be configured to communicate with a terminal or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) in the communication apparatus 700. This is not specifically limited in this embodiment of this application.

It may be understood that the structure of the communication apparatus 700 shown in FIG. 7 does not constitute a limitation on the communication apparatus. An actual communication apparatus may include more or fewer parts than those shown in the figure, or combine some parts, or have different part arrangement.

In addition, for technical effects of the communication apparatus 700, refer to the technical effects of the method in the foregoing method embodiment. Details are not described herein again.

It should be understood that, the processor in this embodiment of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in this embodiment of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example rather than limitative descriptions, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When software is used to implement embodiments, all or a part of the foregoing embodiments may be implemented in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. A part or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining an activated first configured grant CG transmission resource and an activated second CG resource; and
when uplink data is completely carriable by the first CG resource, sending the uplink data by using the first CG resource; or
when the uplink data is not completely carriable by the first CG resource, sending the uplink data by using the first CG resource and a third CG resource, wherein the third CG resource is a part or all of the second CG resource; and
deactivating the second CG resource.

2. The method according to claim 1, wherein the method further comprises:
receiving first information, wherein the first information indicates to deactivate the second CG resource; and
the deactivating the second CG resource comprises:
deactivating the second CG resource based on the first information.

3. The method according to claim 1, wherein the method further comprises:
receiving second information, wherein the second information indicates duration of a timer; and
the deactivating the second CG resource comprises:
deactivating the second CG resource when the timer expires.

4. The method according to claim 1, wherein the method further comprises:
receiving third information, wherein the third information indicates to deactivate the first CG resource; and
the deactivating the second CG resource comprises:
deactivating the second CG resource based on the third information.

5. The method according to claim 4, wherein the method further comprises:
deactivating the first CG resource based on the third information.

6. The method according to any one of claims 1 to 5, wherein the method further comprises:
receiving fourth information, wherein the fourth information indicates a resource priority in the second CG resource; and
determining the third CG resource in the second CG resource based on the resource priority.

7. The method according to any one of claims 1 to 6, wherein the method further comprises:
sending fifth information, wherein the fifth information indicates that the third CG resource has been used for uplink transmission.

8. The method according to any one of claims 1 to 7, wherein the obtaining the activated first CG resource and the activated second CG resource comprises:
receiving a first message, wherein the first message is used to indicate and activate the first CG resource and the second CG resource.

9. A communication apparatus, wherein the apparatus comprises a transceiver module and a processing module, wherein
the transceiver module is configured to obtain an activated first configured grant CG transmission resource and an activated second CG resource;
the processing module is configured to: when uplink data is completely carriable by the first CG resource, control the transceiver module to send the uplink data by using the first CG resource; or when the uplink data is not completely carriable by the first CG resource, control the transceiver module to send the uplink data by using the first CG resource and a third CG resource, wherein the third CG resource is a part or all of the second CG resource; and
the processing module is further configured to deactivate the second CG resource.

10. The apparatus according to claim 9, wherein the transceiver module is further configured to receive first information, wherein the first information indicates to deactivate the second CG resource; and the processing module is further configured to deactivate the second CG resource based on the first information.

11. The apparatus according to claim 9, wherein the transceiver module is further configured to receive second information, wherein the second information indicates duration of a timer; and the processing module is further configured to deactivate the second CG resource when the timer expires.

12. The apparatus according to claim 9, wherein the transceiver module is further configured to receive third information, wherein the third information indicates to deactivate the first CG resource; and the processing module is further configured to deactivate the second CG resource based on the third information.

13. The apparatus according to claim 12, wherein the processing module is further configured to deactivate the first CG resource based on the third information.

14. The apparatus according to any one of claims 9 to 13, wherein the transceiver module is further configured to receive fourth information, wherein the fourth information indicates a resource priority in the second CG resource; and the processing module is further configured to determine the third CG resource in the second CG resource based on the resource priority.

15. The apparatus according to any one of claims 9 to 14, wherein the transceiver module is further configured to send fifth information, wherein the fifth information indicates that the third CG resource has been used for uplink transmission.

16. The apparatus according to any one of claims 9 to 15, wherein the transceiver module is further configured to receive a first message, wherein the first message is used to indicate and activate the first CG resource and the second CG resource.

17. A communication apparatus, wherein the apparatus comprises a processor, the processor is coupled to a memory, the memory is configured to store instructions, and when the processor executes the instructions, the apparatus is caused to perform the method according to any one of claims 1 to 8.

18. A computer-readable storage medium, wherein the computer-readable storage medium stores a computer program or instructions, and when the computer program or the instructions are run, the method according to any one of claims 1 to 8 is performed.

19. A computer program product, comprising a computer program or instructions, wherein when the computer program or the instructions are run, the method according to any one of claims 1 to 8 is performed.
